# EUROPÄISCHE PATENTANMELDUNG

(11) **EP 2 905 294 A1**
(43) Veröffentlichungstag der Anmeldung: **12.08.2015**
(21) Anmeldenummer: 14195933.8
(22) Anmeldetag: 02.12.2014
(51) Int. Cl.: C08G 6/00, C01B 31/20, C01B 17/00, C08K 3/00, C08G 12/40, C08L 61/02, C08L 61/20

(54) **WÄSSRIGE LÖSUNGEN SCHWEFLIGSAURER SALZE VON PRIMÄREN, SEKUNDÄREN ODER TERTIÄREN ALIPHATISCHEN C3- BIS C8-ALKANOLAMINEN ODER DEREN GEMISCHE**

(30) Priorität: 09.12.2013 EP 13196250
(71) Anmelder: BASF SE, 67056 Ludwigshafen (DE)
(72) Erfinder: Lunkwitz, Ralph, 67434 Neustadt (DE)

(57) **Zusammenfassung**

Die vorliegende Erfindung betrifft wässrige Lösungen schwefligsaurer Salze von primären, sekundären oder tertiären aliphatischen C₃- bis C₈-Alkanolaminen oder deren Gemische, sowie ein Verfahren zu deren Herstellung und deren Verwendung als Härter für Aminoplastharze, insbesondere für Melamin-Formaldehydkondensate zur Herstellung von Oberflächenbeschichtungen.

## Beschreibung

Die vorliegende Erfindung betrifft wässrige Lösung eines schwefligsauren Salzes von primären, sekundären oder tertiären aliphatischen C₃- bis C₈-Alkanolaminen oder deren Gemische, ein Verfahren zu deren Herstellung und deren Verwendung als Härter für Aminoplastharze.

Zur Beschleunigung der Härtungsreaktion von Aminoplastharzen sind bereits zahlreiche Katalysatoren bekannt. Sie werden in geringen Mengen den Harzen zugesetzt. Man unterscheidet zwischen unmittelbar wirksamen Katalysatoren (in der Regel Säuren) und sogenannten latenten Katalysatoren.

Die Wirkung der latenten Härtungskatalysatoren beruht darauf, dass sie bei gewöhnlicher Temperatur unwirksam sind und erst in der Wärme oder aufgrund einer chemischen Reaktion eine Säure freisetzen, die den Härtungsvorgang beschleunigt.

Sowohl bei der Verwendung von Aminoplastharzen z.B. auf dem Gebiet der Holzverleimung, wo die Aushärtung relativ unkritisch ist, als auch insbesondere bei der Anwendung auf dem Gebiet der Oberflächenbeschichtung, sind eine Vielzahl von Problemen zu lösen und Anforderungen an die Harze bzw. ihre Lösungen zu stellen.

Die bei der Oberflächenbeschichtung üblichen Imprägnierharzlösungen bzw. die daraus hergestellten sogenannten Harzflotten dienen zum Tränken von saugfähigen Trägermaterialien, z.B. Papier, Vliesstoff oder Gewebe; nach dem Trocknen können die imprägnierten Trägerstoffe durch Heißpressen zu Laminaten verarbeitet werden oder zur Oberflächenbeschichtung von Werkstoffen, z.B. Span- oder Tischlerplatten dienen.

Die Aushärtung der Aminoplastharze geschieht gewöhnlich unter Druck und Hitze. In verarbeitungstechnischer und wirtschaftlicher Hinsicht und im Hinblick auf die wünschenswerten Eigenschaften der erzielten Beschichtung müssen dabei an die Härtungskatalysatoren eine Reihe von Anforderungen gestellt werden, die diese normalerweise nicht immer und zu gleicher Zeit in dem geforderten Maße erfüllen.

Ein gutes Härtungsmittel soll z.B. folgende Bedingungen erfüllen:
1. Bei Raumtemperatur oder geringfügig erhöhter Temperatur soll es möglichst keine härtungsbeschleunigende Wirkung entfalten, um die Lagerfähigkeit des Produktes und damit die Gebrauchsdauer der Imprägnierflotte nicht ungünstig zu beeinflussen.
2. Erst bei der Verarbeitungstemperatur soll die beschleunigende Wirkung eintreten. Die Verarbeitungstemperatur ist jedoch kritisch, weil hierbei zwischen plastischem Verlauf (Schmelzfluss) und Reaktivität ein Zusammenspiel erforderlich ist, um eine geschlossene, porenfreie Oberfläche beim Verprassen zu erzielen.
3. Der Härter darf die Eigenschaften des Fertigproduktes nicht nachteilig, z.B. durch Überhärtungserscheinungen wie Versprödung und Rissbildung beeinflussen.
4. Der Härter soll weiterhin das Reaktivitätsverhalten unter Druck und Hitze so günstig beeinflussen, dass die erzielbaren guten Gebrauchseigenschaften des fertigen Werkstoffs in wirtschaftlicher Zeit, z.B. in Presszeiten von weniger als einer Minute, erreicht werden.

Die Mindestanforderungen an eine moderne gebrauchsfähige Beschichtung gehen dahin, dass der fertige Werkstoff gegenüber Säuren und Wasserdampft beständig ist, eine porenfreie Oberfläche besitzt und damit gegen Schmutz unempfindlich ist und unter späterer Temperaturbelastung rissfrei bleibt. Die Oberfläche soll ruhig wirken und einen möglichst hohen Glanzgrad auch bei Entformung in der Wärme (ohne Rückkühlung) aufweisen.

Günstige verarbeitungstechnische Eigenschaften eines Harzes bedeuten, dass die mit Härter versehene Imprägnierlösung mehrere Tage gebrauchsfähig bleibt, die zur Einstellung des erforderlichen Vorkondensationsgrades benötigte Wärmemenge möglichst gering ist und außerdem die Presswerkzeuge von den Harzbestandteilen chemisch möglichst wenig angegriffen werden. Dies gilt besonders für die Bestandteile des Härters, die in der Wärme - wie erwähnt - saure Eigenschaften entwickeln. Selbstverständlich ist, dass das Werkstück nach der Herstellung leicht aus dem Werkzeug entnommen werden kann, also nicht anhaftet.

Mit den herkömmlichen Härtern ist es im allgemeinen sehr schwierig, die vorab geschilderten Anforderungen zu erfüllen und die angestrebten Gebrauchseigenschaften des fertigen Werkstoffs zu erreichen, da sich einige Anforderungen zu widersprechen scheinen. Spannungsrissbeständigkeit wird durch flexible elastifizierte Aminoplastharze erreicht, während Glanz, Härte und Abriebfestigkeit einer Oberfläche eine gewisse Sprödigkeit voraussetzen. Ferner kommt es bei einer zu stark ausgehärteten Oberfläche bevorzugt zur Porenbildung, da der Schmelzfluss unter Druck und Hitze bei einer hochreaktiv eingestellten Imprägnierlösung nur sehr schwer steuerbar ist. Außerdem ist das Latenzverhalten der herkömmlichen Härter, wenn man kürzeste Aushärtungszeit in der Presse anstrebt. derart, dass die entsprechend eingestellten Imprägnierlösungen bei Raumtemperatur nur einige Stunden gebrauchsfähig bleiben.

Aus der EP-B-0000780 sind bereits schwefligsaure Salze von Ethanolamin, Diethanolamin, Triethanolamin und deren Verwendung als Härter für Aminoplastharze bekannt.

Diese schwefligsauren Salze lassen jedoch zu wünschen übrig.

Demgemäß wurden neue und verbesserte wässrige Lösungen schwefligsaurer Salze von primären, sekundären oder tertiären aliphatischen C₃- bis C₈-Alkanolaminen oder deren Gemische gefunden, sowie ein Verfahren zu deren Herstellung und deren Verwendung als Härter für Aminoplastharze, insbesondere für Melamin-Formaldehydkondensate zur Herstellung von Oberflächenbeschichtungen.

Als wässrige Lösungen von Salzen von schwefliger Säure eignen sich insbesondere primäre, sekundäre oder tertiäre aliphatischen C₃- bis C₈-Alkanolamine oder deren Gemische, bevorzugte primären, sekundären oder tertiären aliphatischen C₃- bis C₆-Alkanolaminen oder deren Gemische, besonders bevorzugt primären, sekundären oder tertiären aliphatischen C₃- bis C₅-Alkanolaminen oder deren Gemische, insbesondere primären, sekundären oder tertiären aliphatischen C₃- oder C₄-Alkanolaminen oder deren Gemische wie n-Propanolamin, Di-n-propanolamin, Tri-n-propanolamin, Isopropanolamin, Diisopropanolamin, Triisopropanolamin, n-Butanolamin, Di-n-butanolamin, Tri-n-butanolamin, Isobutanolamin, Düsobutanolamin, Triisobutanolamin, sec.-Butanolamin, Di-sec.-butanolamin, Tri-sec.-butanolamin, tert.-Butanolamin, Ditert.-butanolamin, Tri-tert.-butanolamin, ganz besonders bevorzugt Isopropanolamin, Diisopropanolamin, Triisopropanolamin oder deren Gemische.

Die wässrigen Lösungen schwefligsaurer Salze von primären, sekundären oder tertiären aliphatischen C₃- bis C₈-Alkanolaminen oder deren Gemische lassen sich durch Einleiten von Schwefeldioxid (SO₂) bzw. schwefliger Säure in primäre, sekundäre oder tertiäre aliphatische C₃- bis C₈-Alkanolamine, bevorzugt deren wässrige Lösungen bei Temperaturen von 30 bis 95°C, bevorzugt 45 bis 85°C, besonders bevorzugt 60 bis 75°C und einem Druck von 0,1 bis 10 bar, bevorzugt 0,5 bis 5 bar, besonders bevorzugt 0,7 bis 2 bar, insbesondere bei Atmosphärendruck (Normaldruck) herstellen. Die Einleitung des Schwefeldioxids kann bis zur Sättigung oder zu jeder Zeit vor der Sättigung abgebrochen werden.

Als wässrige Lösungen von primären, sekundären oder tertiären aliphatischen C₃- bis C₈-Alkanolaminen eignen sich 10 bis 99 Gew.-%ige, bevorzugt 20 bis 95 Gew.-%ige, besonders bevorzugt 30 bis 90 Gew.-%ige, insbesondere 40 bis 85 Gew.-%ige wässrige Lösungen.

Als Aminoplastharze im Sinne der Erfindung sind sowohl Harnstoff- als auch MelaminFormaldehydharze zu verstehen.

Gewöhnlich liegen sie als wässrige Lösungen von Harnstoff-Formaldehyd-Kondensaten mit einem Molverhältnis (Formaldehyd zu Harnstoff) von 1,2:1 bis 1,9:1 oder Melamin-Formaldehyd-Kondensaten mit einem Molverhältnis (Formaldehyd zu Melamin) von 1,5:1 bis 2:1 vor, die bis oder fast bis zur beginnenden Wasserunverträglichkeit kondensiert sind. Auch veretherte oder teilveretherte (voll wasserlösliche) Kondensate und auch die Verwendung nicht wässriger Lösungsmittel sind üblich.

Man verwendet z.B. Harnstoff-Melamin- oder Mischkondensate für Zwecke wie Holzverleimung oder Pressmassen; Harnstoffharze sind üblich zum Tränken sogenannter Grundierfolien, um Holzwerkstoffe lackierbar zu machen. Harnstoffharze vorzugsweise jedoch Melamin-Formaldehyd-Kondensationsprodukte, dienen zur Beschichtung von Holzwerkstoffen mit harzimprägnierten Papieren in kurzen Presszeiten.

Die erfindungsgemäßen Härter werden den Harzen bzw. ihren Lösungen in üblichen Mengen, z.B. 0,1 bis 20 Gew.-%, bezogen auf den Feststoffanteil der Harzlösungen, zugesetzt. Dies kann mehr oder minder kurz vor der Verarbeitung geschehen; im Allgemeinen sind die Lösungen wenigstens einige Stunden, meistens mehrere Tage haltbar. Es kann je nach gewünschtem Glanzgrad die Härterdosierung der Presszeit angepasst werden, wobei gegenüber den üblichen Härtern verbesserte Gebrauchseigenschaften des fertigen Werkstoffs erhalten werden.

Die mit den Lösungen hergestellten, noch nicht ausgehärteten Produkte, also z.B. vorgetrocknete, harzgetränkte Papiere sind im Allgemeinen mehrere Wochen oder Monate haltbar.

Als günstige Anwendungsform der erfindungsgemäßen Härter haben sich sowohl saure als auch neutrale Sulfite als auch deren Mischungen erwiesen. Das Molverhältnis von Alkanolamin bzw. Alkanolamingemisch zu Schwefeldioxid (SO₂) bzw. schwefliger Säure liegt daher in den erfindungsgemäßen Zubereitungen in der Regel zwischen 0,5:1 bis 2:1, bevorzugt 1,5:1 bis 1,1:1.

Die erfindungsgemäß zu verwendenden Härter zeichnen sich dadurch aus, dass sie auch in Mengen, die für eine Kurztaktbeschichtung in besonders kurzen Presszeiten notwendig sind - die Gebrauchsfähigkeit der Harzflotte wesentlich länger erhalten, als dies mit herkömmlichen Härtern, wie reinen Säuren oder mineralsauren Aminsalzen oder Aminsalzen starker aliphatischer oder aromatischer Carbonsäuren möglich ist.

Bei der Verpressung der aminoplastharzgetränkten Trägerbahnen z.B. auf Holzwerkstoffplatten oder mit Schichtstoffen kann die Presszeit im sogenannten Kurztaktverfahren auf unter eine Minute verringert werden, wobei gegenüber den mit üblichen Härtungsmitteln eingestellten Imprägnierlösungen wesentlich geschlossenere, besser gehärtete,wasserdampfbeständigere und glänzendere Oberflächen erhalten werden. Die Oberflächen bleiben auch bei späterer Temperatureinwirkung vollkommen rissfrei.

### Beispiele

### Beispiel A

### Herstellung von Härter A

350 g Isopropanolamin (4,67 mol) und 200 g Wasser wurden bei Raumtemperatur vorgelegt, auf 70°C vorgeheizt und bei dieser Temperatur SO₂-Gas eingeleitet, bis der pH-Wert auf abgefallen war. Nach Abkühlung und Bilanzierung (Rückwiegen des Kolbens zur Bestimmung der Menge des eingeleiteten Schwefeldioxides; daraus ergab sich 237 g (3,7 mol) SO₂, Molverhältnis Alkanolamin zu SO₂ = 1,26:1) wurde die Reaktionsmischung durch Zugabe von 30 g Wasser auf die gewünschte Endkonzentration verdünnt.

### Beispiel B

### Herstellung von Härter B

370 g Triisopropanolamin (1,94 mol) und 200 g Wasser wurden analog zu Beispiel A umgesetzt. Nach Abkühlung und Bilanzierung (Rückwiegen des Kolbens zur Bestimmung der Menge des eingeleiteten Schwefeldioxides; daraus ergab sich 60,5 g (0,945 mol) SO₂, Molverhältnis Alkanolamin zu SO₂ = 2,05:1) wurde die Reaktionsmischung durch Zugabe von 30 g Wasser auf die gewünschte Endkonzentration verdünnt.

### Beispiel C

### Herstellung von Härter C

350 g Diisopropanolamin (2,63 mol) und 200 g Wasser wurden analog zu Beispiel A umgesetzt. Nach Abkühlung und Bilanzierung (Rückwiegen des Kolbens zur Bestimmung der Menge des eingeleiteten Schwefeldioxides; daraus ergab sich 99,7 g (1,56 mol) SO₂, Molverhältnis Alkanolamin zu SO₂ = 1,69:1) wurde die Reaktionsmischung durch Zugabe von 30 g Wasser auf die gewünschte Endkonzentration verdünnt.

### Beispiel D

### Herstellung des Melaminharzes

Eine 60 Gew.-%ige wässrige Lösung von Kauramin® Tränkharzes 796 flüssig der Firma BASF SE (Technisches Merkblatt, M 6376 d, Juni 2012, BASF SE) im Molverhältnis von Formaldehyd zu Melamin von 1,65:1 wurde mit den in Tabelle 1 angegebenen Härtermengen versetzt, so dass die in Tabelle 1 angegebenen Trübungszeiten resultierten. Derartige wässrige Lösungen aus Melaminharz und Härter werden allgemein als "Imprägnierharzflotte" oder "Flotte" bezeichnet.

### Beispiel 1 bis 3

### Allgemeine Versuchsdurchführung

Mit der nach Beispiel D hergestellten Flotte wurde Overlaypapier (Flächengewicht 25 g/m²) getränkt, im Umlufttrockenschrank bei 120°C 3 Minuten getrocknet. Die so erhaltenen Papiere hatten den in Tabelle 1 angegebenen Harzauftrag und Restfeuchtegehalt.

Diese Overlay-Imprägnate wurden anschließend unter Druck (25 bar) und einer Temperatur von 180°C gemeinsam mit weißen Dekorimprägnaten auf 6 mm dicke Faserplatten 30 Sekunden verpresst und nach Abkühlung und Lagerung bei Raumtemperatur über mindestens 16 Stunden getestet.

Die Testergebnisse sind in Tabelle 1 zusammengestellt.

| Beispiel | 1 | 2 | 3 |
|---|---|---|---|
| 60 Gew.-%ige wässrige Lösung von des Kauramin® Tränkharzes 796 flüssig [g] | 100 | 100 | 100 |
| Wasser [g] | 7,1 | 7,1 | 7,1 |
| Härter A [g] | 0,3 | | |
| Härter B [g] | | 0,6 | |
| Härter C [g] | | | 0,6 |
| Trübungszeit ¹⁾ [Sekunden] | 272 | 658 | 348 |
| Restfeuchtegehalt ²⁾ [%] | 6,5 | 8 | 7,4 |
| Harzauftrag ³⁾ [%] | 197 | 200 | 211 |
| Rakel | 4/4 | 4/4 | 4/4 |
| Trocknen 120°C [Sekunden] | 180 | 180 | 180 |
| Wasserdampf ⁴⁾ | 1 | 1 | 1 |
| Härtung ⁵⁾ | 1-2 | 1-2 | 1-2 |
| Risstest ⁶⁾ | 1 | 0 | 0 |

¹⁾ = Trübungszeit ist die Zeit in Sekunden, nach der sich bei 100°C die Mischung aus Melaminharz und Härter deutlich und irreversibel eintrübt
²⁾ = Restfeuchtegehalt: [Gewicht Overlay-Imprägnat vor Trocknung] - [Overlay-Imprägnat nach Trocknung] • [100] ÷ [Gewicht Overlay-Imprägnat vor Trocknung]
³⁾ = Harzauftrag ([Gewicht getrocknetes Overlay-Imprägnat] - [Gewicht Overlaypapier] • [100] ÷ [Gewicht Overlaypapier])
⁴⁾ = Verhalten gegenüber Wasserdampf
- Grundlage:: Die Prüfung erfolgt nach DIN 53 799 und zeigt den Einfluss von Wasserdampf auf beschichtete Flächen.
- Durchführung:: In einem Erlenmeyerkolben wurden 200 ml Wasser zum Sieden erhitzt und die zu prüfende Probe mit der Dekorseite nach unten auf die Öffnung des Erlenmeyerkolbens aufgesetzt und gegen die Hitze der Kochplatte durch den Alu-Ring abgeschirmt. Die Probe blieb 1 Stunde dem Dampf ausgesetzt und wurde anschließend mit einem Tuch abgetrocknet.
- Auswertung:: 1 = gut, kein sichtbarer Angriff,
2 = gut, minimal sichtbarer Angriff,
3 = befriedigend, leichter sichtbarer Angriff durch Wasserdampf (Oberfläche vergraut bzw. wird leicht weiß)
4 = befriedigend, mäßiger Angriff durch Wasserdampf (Oberfläche vergraut bzw. weiß)
5 = schlecht, starker Angriff durch Wasserdampf, Bildung kleiner Bläschen auf der Oberfläche
6 = schlecht, massive Blasenbildung durch Wasserdampfangriff auf der Oberfläche
⁵⁾ = Bestimmung der Härtung
- Grundlage:: Die Bestimmung des Aushärtegrades einer Oberfläche
- Geräte:: Kunststoffspritzflasche, 0,2 n HCl - 0,004 Gew.-% Rhodamin B extra, Gläschen (20 mm Durchmesser, 20 mm hoch)
- Durchführung:: Die Gläschen werden mit der angesetzten HCl-Rhodaminlösung zu 2/3 gefüllt und mit der Öffnung auf die zu prüfende Fläche über Nacht (16 Std.) gestellt. Danach werden die Gläschen entfernt und die Oberfläche wird feucht abgewischt.
- Auswertung:: Der Angriff der Chemikalie (verdünnte HCl) auf die Oberfläche wurde wie folgt ausgewertet:
1 = kein Angriff, Oberfläche bleibt weiß
2 = minimale, gerade noch erkennbare Rosafärbung
3 = leichte, durchgängig erkennbare Rosafärbung
4 = starke, durchgängig erkennbare Rosafärbung
5 = massive, durchgängig erkennbare Rosa/. Rotfärbung
6 = massive, durchgängig erkennbare Rosa/. Rotfärbung teilweise Zerstörung der Oberfläche durch Blasenbildung
⁶⁾ = Risstest: Bestimmung der Rissempfindlichkeit
- Grundlage:: Bestimmung der Fähigkeit, einer Rissbildung bei trockener Hitze zu widerstehen.
- Durchführung:: Die Prüfkörper wurden 24 h in einem Wärmeschrank mit Umluft bei 70°C zu lagern. Nach anschließender Abkühlung von 24 h im Normalklima bei 23°C / 50% relative Luftfeuchte wurde durch Betrachtung mit einer Lupe mit sechsfacher Vergrößerung beurteilt, ob und in welchem Umfang Risse entstanden sind.
- Auswertung:: Es wurden zwei Arten von Rissen unterschieden. Zum einen die Haarrisse, die teilweise nur schwer mit bloßem Auge zu erkennen sind und zum anderen Oberflächenrisse, die die Oberfläche aufbrechen und bis in die Trägerplatte reichen können, diese sind deutlich zu erkennen und fühlbar.
Stufe 1: ohne Risse
Stufe 2: vereinzelte Haarrisse
Stufe 3: Haarrisse über die gesamte Oberfläche regellos verteilt
Stufe 4: zusätzlich zur Stufe 3 treten ein bis zwei kleine Oberflächenrisse <25mm auf
Stufe 5: mehrere Oberflächenrisse über die gesamte Oberfläche verteilt

## Patentansprüche

1. Wässrige Lösungen schwefligsaurer Salze von primären, sekundären oder tertiären aliphatischen C₃- bis C₈-Alkanolaminen oder deren Gemische.

2. Wässrige Lösungen schwefligsaurer Salze primären, sekundären oder tertiären aliphatischen C₃- bis C₈-Alkanolamin nach Anspruch 1, **dadurch gekennzeichnet, dass** man primäre, sekundäre oder tertiäre aliphatische C₃- bis C₆-Alkanolamine oder deren Gemische einsetzt.

3. Wässrige Lösungen schwefligsaurer Salze primären, sekundären oder tertiären aliphatischen C₃- bis C₈-Alkanolamin nach Anspruch 1 oder 2, **dadurch gekennzeichnet, dass** man primäre, sekundäre oder tertiäre aliphatische C₃- bis C₅-Alkanolamine oder deren Gemische einsetzt.

4. Wässrige Lösungen schwefligsaurer Salze primären, sekundären oder tertiären aliphatischen C₃- bis C₈-Alkanolamin nach einem der Ansprüche 1 bis 3, **dadurch gekennzeichnet, dass** man primäre, sekundäre oder tertiäre aliphatische C₃- bis C₄-Alkanolamine oder deren Gemische einsetzt.

5. Wässrige Lösungen schwefligsaurer Salze primären, sekundären oder tertiären aliphatischen C₃- bis C₈-Alkanolamin nach einem der Ansprüche 1 bis 4, **dadurch gekennzeichnet, dass** man n-Propanolamin, Di-n-propanolamin, Tri-n-propanolamin, Isopropanolamin, Diisopropanolamin, Triisopropanolamin, n-Butanolamin, Di-n-butanolamin, Tri-n-butanolamin, Isobutanolamin, Diisobutanolamin, Triisobutanolamin, sec.-Butanolamin, Disec.-butanolamin, Tri-sec.-butanolamin, tert.-Butanolamin, Di-tert.-butanolamin, Tri-tert.-butanolamin oder deren Gemische einsetzt.

6. Wässrige Lösungen schwefligsaurer Salze primären, sekundären oder tertiären aliphatischen C₃- bis C₈-Alkanolamin nach einem der Ansprüche 1 bis 4, **dadurch gekennzeichnet, dass** man Isopropanolamin, Diisopropanolamin, Triisopropanolamin oder deren Gemische einsetzt.

7. Wässrige Lösungen schwefligsaurer Salze primären, sekundären oder tertiären aliphatischen C₃- bis C₈-Alkanolamin nach einem der Ansprüche 1 bis 4, **dadurch gekennzeichnet, dass** das Molverhältnis von Alkanolamin bzw. Alkanolamingemisch zu Schwefeldioxid (SO₂) bzw. schwefliger Säure 0,5:1 bis 2:1 beträgt.

8. Wässrige Lösungen schwefligsaurer Salze primären, sekundären oder tertiären aliphatischen C₃- bis C₈-Alkanolamin nach einem der Ansprüche 1 bis 4, **dadurch gekennzeichnet, dass** das Molverhältnis von Alkanolamin bzw. Alkanolamingemisch zu Schwefeldioxid (SO₂) bzw. schwefliger Säure 1,5:1 bis 1,1:1.

9. Verfahren zur Herstellung der wässrigen Lösungen schwefligsaurer Salze nach einem der Ansprüche 1 bis 8, **dadurch gekennzeichnet, dass** man Schwefeldioxid (SO₂) bzw. schwefliger Säure in primäre, sekundäre oder tertiäre aliphatische C₃- bis C₈-Alkanolamine bei Temperaturen von 30 bis 95°C und einem Druck von 0,1 bis 10 bar einleitet.

10. Verfahren zur Herstellung der wässrigen Lösungen schwefligsaurer Salze nach einem der Ansprüche 1 bis 8, **dadurch gekennzeichnet, dass** man Schwefeldioxid (SO₂) bzw. schwefliger Säure in wässrige Lösungen von primären, sekundären oder tertiären aliphatischen C₃- bis C₈-Alkanolaminen bei Temperaturen von 30 bis 95°C und einem Druck von 0,1 bis 10 bar einleitet.

11. Verfahren zur Herstellung der wässrigen Lösungen schwefligsaurer Salze nach einem der Ansprüche 1 bis 8, **dadurch gekennzeichnet, dass** man Schwefeldioxid (SO₂) bzw. schwefliger Säure in 10 bis 99 Gew.-%ige wässrige Lösungen von primären, sekundären oder tertiären aliphatischen C₃- bis C₈-Alkanolaminen bei Temperaturen von 30 bis 95°C und einem Druck von 0,1 bis 10 bar einleitet.

12. Verwendung der wässrigen Lösungen schwefligsaurer Salze nach einem der Ansprüche 1 bis 11 als Härter für Aminoplastharze.

13. Verwendung der wässrigen Lösungen schwefligsaurer Salze nach einem der Ansprüche 1 bis 11 als Härter für Melamin-Formaldehydkondensate zur Herstellung von Oberflächenbeschichtungen.
